# FASCICULE DE BREVET EUROPEEN

(11) **EP 1 442 557 B1**
(45) Date de publication et mention de la délivrance du brevet: **15.08.2007**
(21) Numéro de dépôt: 02800177.4
(22) Date de dépôt: 03.10.2002
(51) Int. Cl.: H04L 9/32, G07F 7/10

(54) **SYSTEME ET PROCEDE POUR CREER UN RESEAU SECURISE EN UTILISANT DES JUSTIFICATIFS D'IDENTITE DE LOTS DE DISPOSITIFS**
SYSTEM UND VERFAHREN ZUR ERZEUGUNG EINES GESICHERTEN NETZES UNTER VERWENDUNG VON BEGLAUBIGUNGEN VON VERFAHRENSGRUPPEN
SYSTEM AND METHOD FOR CREATING A SECURE NETWORK USING IDENTITY CREDENTIALS OF BATCHES OF DEVICES

(30) Priorité: 03.10.2001 US 326527 P
(43) Date de publication de la demande: 04.08.2004
(73) Titulaire: GEMPLUS, 13881 Gémenos Cedex (FR)
(72) Inventeur: MERRIEN, Lionel, Montreal, Québec H4A 3E8 (CA); CARRARA, Jean-Louis, Dallas, TX 75254 (US); BEBIC, Youri, Dallas, TX 75205 (US); MILLER, Paul, Cumberland, RI 02864 (US)
(86) Numéro de dépôt international: PCT/FR2002/003369
(87) Numéro de publication internationale: WO 2003/030109

(56) Documents cités:
- EP-A- 1 117 207
- EP-A- 1 130 491
- WO-A-01/27886
- FR-A- 2 795 262
- US-A- 5 745 571

## Description

### Domaine de l'invention

la présente invention concerne généralement la réalisation de transactions sécurisées sur un réseau de communication par voie de justificatifs d'identité, tels qu'un certificat utilisé dans une infrastructure à clé publique (I.C.P). Plus particulièrement, la présente invention concerne l'utilisation de certificats, ou autre notarisation, pour des lots de dispositifs pour authentifier et valider des dispositifs employés dans le commerce via un réseau de communication.

### Arrière-plan technologique de l'invention

Le document de brevet FR 2 795 262 décrit un procédé comprenant l'affectation, par une autorité de certification, d'un certificat pour chaque dispositif devant être utilisé dans des transactions sécurisées via un réseau de communication ouvert .

Par ailleurs, le brevet US 5 745 571 décrit un procédé pour déployer un réseau sécurisé permettant la réalisation de transactions sécurisées via un réseau de communication ouvert par l'intermédiaire de dispositifs tels que cartes intelligentes, ce procédé comprenant l'affectation vers une autorité d'enregistrement par une autorité de certification d'un seul certificat d'identité à un lot ou groupe de dispositifs/cartes devant être utilisés dans des transactions sécurisées via le réseau de communication ouvert.

Avec l'avènement de l'Internet, le nombre de transactions en ligne a considérablement augmenté. Avec cette augmentation, les préoccupations en matière de sécurité des transactions, d'authentification des parties à la transaction, de non-répudiation de la transaction, ainsi que d'authentification et de validation de dispositifs utilisés dans de telles transactions se sont également accrues. En réponse à ces préoccupations, une infrastructure à clé publique (I.C.P.) a été développée, dans laquelle des certificats numériques et un couple de clés cryptographiques apparentées sont délivrés par des autorités de certification (A.C.) à des individus et des institutions impliqués dans le commerce électronique (e-commerce) par le biais de réseaux ouverts tels que l'Internet. Ces certificats ont pour objectif d'authentifier l'identité des deux parties à une transaction, de pourvoir à la non-répudiation de la transaction, et sont associés à des couples de clés par lesquelles peut être réalisé le cryptage des transactions effectuées via l'Internet. L'évolution des transactions du type de l'infrastructure I.C.P. a pris une ampleur considérable au cours de ces dernières années.

La première phase de l'I.C.P. utilisait des certificats liés à l'identité d'individus. Au cours de cette première phase, l'utilisateur était prié de demander et télécharger un certificat, qui pouvait alors être utilisé en relation avec son couple de clés cryptographiques apparenté pour des transactions authentifiées sécurisées sur l'Internet. Chaque utilisateur payait pour son propre couple de clés cryptographiques et son propre certificat. Cette première phase d'infrastructure I.C.P.fournissait une identification personnelle directe des personnes impliquées dans des transactions sur l'Internet. De plus, les frais associés à l'obtention d'un seul certificat sont relativement faibles.

La deuxième phase de l'évolution de l'I.C.P. permettait à des institutions de demander des certificats pour le compte de personnes sur lesquelles elles disposaient de renseignements spéciaux. Par exemple, une banque ou un autre organisme similaire pouvait demander un certificat d'I.C.P. pour le compte de l'un de ses clients ou membres. Ce certificat était lié aux informations d'identification de la personne pour le compte de laquelle le certificat était demandé, et les informations d'identification étaient fournies par l'organisme demandeur. Un certificat et un couple de clés cryptographiques associés étaient alors délivrés pour le compte de la personne à l'organisme demandant le certificat et le certificat était délivré à un utilisateur, éventuellement sous la forme d'un jeton. Des exemples de jetons qui peuvent stocker des informations de certificats incluent les cartes à puce, les clés à puce et d'autres types de matériels capables de stocker la clé privée et le certificat numérique (ou la référence à un certificat numérique) en mémoire. Le coût du certificat initialement payé par l'organisme demandeur pouvait être récupéré dans la mesure où un utilisateur payait pour des services ou des dispositifs (par ex., les jetons sur lesquels le certificat et le couple de clés cryptographiques étaient enregistrés) de l'organisme demandeur.

Ainsi, dans la deuxième phase de l'évolution de l'I.C.P., le processus d'obtention d'un certificat était transparent pour un utilisateur, celui-ci n'ayant pas à demander et / ou télécharger un certificat. Par conséquent, la deuxième phase de l'évolution de l'I.C.P. était plus facile à utiliser que la première phase, et a rencontré moins de résistance de la part des clients.

La troisième phase de l'évolution de l'I.C.P. a représenté un changement fondamental dans la manière dont les certificats numériques étaient émis. Dans les deux premières phases, un certificat numérique était lié à l'identification d'une personne spécifique. Dans la troisième phase cependant, le certificat numérique était lié à un numéro d'identification de dispositif. Dans la troisième phase de l'évolution de l'I.C.P., un fabricant de dispositifs devant être utilisés dans le commerce sur l'Internet demande des certificats pour chaque dispositif qu'il a fabriqué. Le fabricant conserve alors des enregistrements concernant chaque dispositif et son état de sorte que, quand le certificat correspondant à ce dispositif est utilisé, on peut authentifier le dispositif, vérifier que le dispositif fonctionne correctement et vérifier que son certificat n'a pas été révoqué. Le dispositif, par le biais de son certificat, est capable d'ouvrir une liaison d'intercommunication sécurisée, le dispositif pouvant communiquer de façon sécurisée avec d'autres dispositifs sur le réseau auquel il est connecté.

Un exemple dans lequel la troisième phase de l'évolution de l'I.C.P. peut être utilisée se situe dans le domaine de la téléphonie mobile. Particulièrement, par exemple, la troisième phase peut être utilisée dans le système global de communications mobiles (GSM), dans lequel chaque téléphone fonctionnant sur le réseau contient une carte de module d'identité d'abonné, à laquelle il est souvent fait référence sous le terme de carte SIM ou carte à puce. La carte SIM peut renfermer des informations concernant le compte de l'utilisateur auquel la carte SIM a été affectée. Un utilisateur peut alors retirer sa carte SIM et l'insérer dans un nouveau téléphone, qui commencera immédiatement à fonctionner selon l'identification et les préférences de l'utilisateur conservées en mémoire à l'intérieur de la carte SIM. Dans ce modèle, le fournisseur de services, ou l'entreprise de service téléphonique, est l'organisme qui demande un certificat pour chaque dispositif, qui est dans ce cas enregistré à l'intérieur de chaque carte SIM. Au moyen de la carte SIM, les utilisateurs de téléphones mondiaux au sein du système GSM peuvent aisément effectuer des transactions sécurisées via un réseau sans fil, tel qu'un réseau utilisant le protocole d'application sans fil (WAP), par exemple, en utilisant un couple de clés cryptographiques qui peut être associé à et / ou enregistré dans la carte SIM. Un tel procédé est décrit dans la demande de brevet FR-A-2 795 262.

La troisième phase de l'évolution de l'I.C.P. a connu du succès dans de nombreux environnements dans lesquels des cartes à puce sont utilisées. Comme il a été mentionné ci-dessus, les cartes à puce sont utilisées au sein du système GSM dans le monde entier. Toutefois, les cartes à puce sont également utiles dans le domaine bancaire et d'autres environnements commerciaux. Les cartes à puce constituent un choix logique pour le dispositif auquel un certificat peut être lié, étant donné qu'elles sont considérées comme sécurisées dans une variété d'environnements différents, comme les réseaux sans fil et les réseaux de paiement, ainsi que par de nombreuses lois sur la signature numérique. Qui plus est, les cartes à puce représentent un choix logique dans la mesure où leur sécurité a été testée en théorie et sur le terrain. Les cartes à puce requièrent généralement un processus d'authentification à deux facteurs, qui implique à la fois quelque chose que l'utilisateur connaît et quelque chose que l'utilisateur possède. En général, dans l'environnement des cartes à puce, l'utilisateur possède la carte et connaît un numéro d'identification personnel (PIN) ou un autre type de mot de passe. La troisième phase de l'évolution de l'I.C.P. a présenté à l'utilisateur un modèle commercial familier, très similaire au fait de recevoir une carte de distributeur automatique de billets, une carte de crédit ou similaire.

Néanmoins, divers problèmes existent dans l'ensemble des trois phases précédentes de l'évolution de l'I.C.P. susmentionnée. Premièrement, utiliser des certificats pour identifier chaque dispositif sur un réseau de communication, comme dans la troisième phase où les dispositifs sont fabriqués en série, coûte cher. C'est pourquoi l'I.C.P. a été développée selon le modèle de la première phase, où chaque personne conservait un certificat numérique, payait pour le certificat lui-même et n'en demandait souvent pas plus d'un. Cependant, les certificats étant affectés à des dispositifs, il y a des certificats séparés pour chaque dispositif utilisé. De ce fait, une personne peut demander un grand nombre de dispositifs tout au long de son existence, chacun desquels peut requérir un certificat numérique pour des transactions sécurisées via un réseau de communication. Par conséquent, le coût de plusieurs dispositifs de ce type peut devenir trop élevé et encombrerait le flux du commerce sur l'Internet requérant des certificats numériques. De même, si ce certificat est payé par le fabricant de dispositifs, le nombre de dispositifs fabriqués, et par conséquent les frais liés à la fourniture d'un certificat pour chaque dispositif, peuvent s'avérer stupéfiants.

Un deuxième problème afférent à la troisième phase de l'évolution de l'I.C.P. est que l'identité d'un utilisateur et le couple de clés apparenté à l'identité de l'utilisateur, doivent être ajoutées au dispositif après sa fabrication. Cela pose des problèmes de sécurité et d'authentification, étant donné qu'un utilisateur illégitime pourrait éventuellement ajouter son couple de clés frauduleux au dispositif après fabrication, et, de ce fait, être à l'origine d'une fraude sur le réseau alors qu'il utilise un dispositif sécurisé.

Troisièmement, parce que le réseau sur lequel des dispositifs sont généralement utilisés est ouvert, le dispositif doit être certifié (ou sécurisé) pour permettre des communications sécurisées via le réseau ouvert. C'est une considération importante dans la mesure où aucun service sécurisé ne pourrait être ajouté via une liaison d'intercommunication par le biais d'un réseau ouvert sans avoir deux points d'extrémité sécurisés. Ainsi, à la fois le serveur et le dispositif doivent être certifiés (ou sécurisés). De tels services sécurisés souhaités peuvent inclure, par exemple, la distribution de clés de cryptage, l'ajout d'identités d'utilisateur et / ou l'émission de données privées, telles des informations sur les préférences ou le profil de l'utilisateur.

En conséquence, il est souhaitable de développer un système utilisant une infrastructure I.C.P. qui est capable de résoudre chacun des problèmes susmentionnés. Particulièrement, il serait souhaitable de développer un système d'I.C.P. qui soit capable de réduire au minimum le coût des certificats attribués aux dispositifs et d'augmenter la sécurité associée à l'émission du couple de clés d'un utilisateur (c.-à-d. un "couple de clés d'utilisateur") associée au dispositif, ainsi que de fournir une technique par laquelle des informations sur les préférences et le profil de l'utilisateur peuvent être transmises rapidement et facilement.

### Résumé de l'invention

La présente invention propose des solutions aux problèmes susmentionnés. Spécialement, la présente invention réduit le coût global associé à l'affectation de certificats à des dispositifs, propose une manière par laquelle des couples de clés d'utilisateurs associées aux certificats de dispositifs peuvent être ajoutées d'une façon sécurisée pouvant être aisément authentifiée et non répudiée, et propose une technique par laquelle des informations sur les préférences et le profil de l'utilisateur peuvent être aisément enregistrées et transmises ou reçues via le réseau de communication après authentification mutuelle du serveur et du dispositif.

Selon un mode de réalisation de la présente invention, un seul justificatif d'identité, tel qu'un certificat numérique (par ex., un certificat d'I.C.P., une notarisation, etc.), peut être associé à tous les identificateurs de dispositifs pour un groupe ou un lot de dispositifs. Ainsi, le coût associé à l'émission de certificats pour un grand nombre de dispositifs peut être considérablement réduit. Un manifeste, ou une liste de dispositifs au moment de la création, est stocké dans une base de données d'engagement et forme une liste permanente qui n'est pas altérée, fournissant un enregistrement permanent de tous les dispositifs initialement reliés à une certification. De surcroît, une liste courante des dispositifs dont l'utilisation a été approuvée avec le certificat affecté est tenue, et une liste de dispositifs qui ne fonctionnent plus, ont eu leur clé de dispositif compromise ou ne devraient plus être considérés comme sûrs (par ex. une liste de révocation ou une "liste rouge") est également tenue selon un mode de réalisation de la présente invention.

Le couple de clés de dispositif associé à chaque dispositif est assorti à des identificateurs de dispositifs, comme des numéros d'identification de dispositifs. La clé privée de ce couple de clés peut, selon un mode de réalisation de la présente invention, être conservée exclusivement à l'intérieur du matériel de la carte à puce. En conservant la clé privée de dispositif exclusivement dans le matériel, la probabilité que la clé privée soit copiée est nettement réduite. Ainsi, la sécurité globale des systèmes utilisant des dispositifs qui conservent des copies de leurs clés privées exclusivement à l'intérieur du matériel est bien meilleure que les systèmes où les clés privées sont conservées à l'intérieur du logiciel.

De plus, selon un mode de réalisation de la présente invention, une plus grande sécurité peut être obtenue en utilisant chaque dispositif pour générer un couple de clés d'utilisateur associé à l'utilisateur du dispositif. Dans un tel mode de réalisation, un utilisateur qui a reçu un dispositif, tel qu'une carte à puce, comportant une clé privée de dispositif associée enregistrée dans le matériel du dispositif, peut être présent pour la génération d'un couple de clés d'utilisateur relativement fiable dans le dispositif. La clé publique d'utilisateur peut alors être signée en utilisant la clé privée d'utilisateur et transmise à, ainsi que décryptée par, un personnel autorisé recevant la clé publique de dispositif signée via le réseau utilisant la clé publique du dispositif. Le fait que la clé d'utilisateur soit signée par la clé de dispositif prouve que le dispositif a généré le couple de clés d'utilisateur.

Ainsi, des tierces parties peuvent aisément vérifier que le couple de clés d'utilisateur est enregistré dans le matériel d'un dispositif particulier et que l'utilisateur était présent au moment où le couple de clés d'utilisateur a été généré. Selon la présente invention, des dispositifs utilisés dans des transactions sur l'Internet peuvent être vérifiés par rapport au certificat de lot et assignés au lot dont provient le dispositif. La révocation et / ou les listes rouges peuvent être consultées pour déterminer que le dispositif est toujours en fonction et est toujours un dispositif sécurisé, autorisé à émettre des données via un réseau ouvert, comme l'Internet ou le réseau de téléphonie mobile GSM. En outre, selon un mode de réalisation de la présente invention, il est possible d'enregistrer à distance des informations sur le profil et les préférences de l'utilisateur et d'y accéder par l'intermédiaire d'un pointeur enregistré à l'intérieur du dispositif. Ces informations peuvent être enregistrées dans un fichier "cookie", par exemple, à un emplacement éloigné du dispositif au sein du réseau, et référencées par un pointeur. De manière avantageuse, l'enregistrement à distance de ces informations sur le profil et les préférences évite de surcharger la mémoire ainsi que les contraintes de largeur de bande du dispositif.

D'autres caractéristiques et avantages de l'invention sont expliqués plus en détail ci-après en référence à des modes de réalisation spécifiques qui sont illustrés sur les dessins joints, dans lesquels les mêmes numéros de référence sont utilisés pour désigner les mêmes éléments.

### Brève description des Dessins

La figure 1A est un schéma fonctionnel des éléments de base impliqués dans la phase un de l'évolution de l'I.C.P.
La figure 1B est un organigramme des étapes associées à la délivrance d'un certificat d'I.C.P. dans la phase deux de l'évolution de l'I.C.P.
La figure 2A est un schéma fonctionnel des éléments de base impliqués dans la phase deux de l'évolution de l'I.C.P.
La figure 2B est un organigramme illustrant les étapes associées à la délivrance d'un certificat dans la phase deux de l'évolution de l'I.C.P.
La figure 3A est un schéma fonctionnel illustrant les éléments de base de la délivrance d'un certificat d'I.C.P., où le certificat est lié au(x) identificateur(s) de dispositifs.
La figure 3B est un organigramme illustrant les étapes associées à la délivrance d'un certificat dans la phase trois de l'évolution de l'I.C.P.
La figure 4A est un schéma fonctionnel illustrant les éléments de base des certificats de lots de dispositifs selon un mode de réalisation de la présente invention.
La figure 4B est un organigramme illustrant les étapes associées à un mode de réalisation de la présente invention.
La figure 5 est une illustration d'un manifeste de dispositifs utilisé selon un mode de réalisation de la présente invention.
La figure 6A est un organigramme illustrant les stades de base de la durée de vie d'un dispositif selon un mode de réalisation de la présente invention.
La figure 6B est un organigramme illustrant les étapes associées au fait de relier un certificat à un groupe de dispositifs et de délivrer un dispositif à un client selon une réalisation de la présente invention.
La figure 7A est un schéma fonctionnel illustrant les éléments de base associés à l'activation du dispositif selon un mode de réalisation de la présente invention.
La figure 7B est un organigramme illustrant les étapes associées à l'activation du dispositif selon un mode de réalisation de la présente invention.
La figure 7C est un organigramme illustrant les étapes associées à la production d'un couple de clés d'utilisateur selon un mode de réalisation de la présente invention.
La figure 8 est un schéma fonctionnel d'un mode de réalisation de la présente invention concernant des éléments des figures 4A et 7A.
La figure 9A est un schéma fonctionnel illustrant les éléments associés à la validation d'un dispositif selon un mode de réalisation de la présente invention.
La figure 9B est un organigramme illustrant les étapes associées à la validation d'un dispositif selon un mode de réalisation de la présente invention.
La figure 9C est un organigramme illustrant les étapes associées au traitement, d'une demande de validation selon un mode de réalisation de la présente invention.
La figure 10 est un schéma fonctionnel illustrant une chaîne d'autorités de certification utilisée selon un mode de réalisation de la présente invention.
La figure 11 est un schéma fonctionnel des éléments associés l'utilisation d'un pointeur pour des informations sur le profil / les préférences, situées à distance, selon un mode de réalisation de la présente invention.

### Description détaillée

Pour faciliter la compréhension des principes et caractéristiques de la présente invention, celle-ci est expliquée ci-après en référence à sa mise en oeuvre dans un mode de réalisation illustratif. En particulier, l'invention est décrite dans le contexte de dispositifs à cartes à puce, dans lesquels un couple de clés différent est assigné à chacune des cartes. Les cartes à puce sont regroupées en lots de fabrication, chaque lot comportant un seul justificatif d'identité (par ex., un certificat numérique qui y est associé). Un mode de réalisation spécifique d'un tel système est décrit dans le contexte de l'utilisation de cartes SIM en rapport avec le système de communications mobiles GSM. De plus, la présente invention est décrite en relation avec le système d'I.C.P., qui permet un cryptage et un décryptage au moyen d'une clé cryptographique privée et publique, ainsi que la validation ou l'authentification par voie de notarisation émise par une entité de notarisation numérique, ou une autorité de certification.

On comprendra néanmoins le fait que cela ne constitue pas le seul mode de réalisation dans lequel l'invention peut être mise en oeuvre. En revanche, celle-ci peut s'avérer utile dans une variété de configurations de sécurité. Par exemple, d'autres applications commerciales, outre les cartes à puce et les cartes SIM associées au système de téléphonie mobile GSM, peuvent bénéficier des caractéristiques de la présente invention. De plus, la présente invention ne doit pas être limitée par les contraintes du système d'I.C.P., mais peut plutôt être employée dans une variété de systèmes de sécurité qui utilisent le cryptage au moyen de clés publiques et/ou privées, ainsi que l'authentification au moyen d'un certificat numérique ou d'une autre technique similaire. Pour des raisons de commodité, un bref aperçu des systèmes précédents, associés aux précédentes phases de l'évolution de l'I.C.P., va être ci-après donné afin d'illustrer et de souligner les différences et les avantages de la présente invention par rapport à de tels systèmes antérieurs.

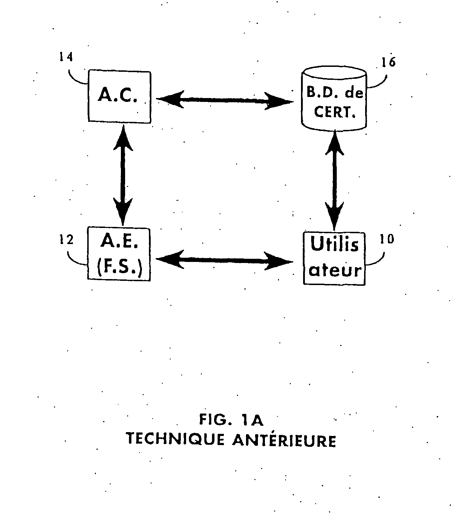

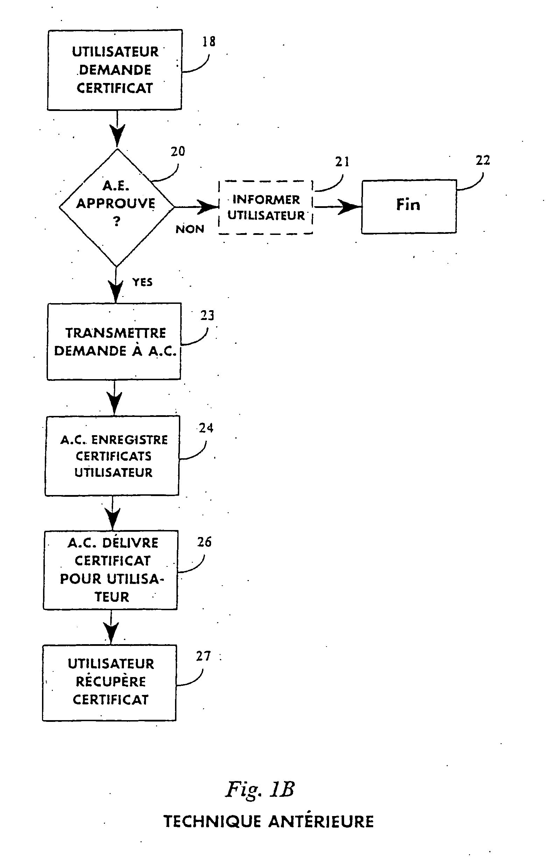

Sur la figure 1A, un schéma fonctionnel illustrant les divers éléments associés à la phase un de l'évolution de l'I.C.P. est présenté. La figure 1B présente les étapes associées à la demande de l'utilisateur et à la délivrance d'un certificat à ce dernier, utilisant le modèle de la phase un de l'évolution de l'I.C.P. Aussi, la figure 1B sera-t-elle évoquée en relation avec la figure 1A afin de fournir une meilleure illustration de la manière dont sont associées les éléments de la figure 1A.

Plusieurs éléments qui forment la structure de base de la phase un de l'évolution de l'I.C.P. sont présentés sur la figure 1A. Particulièrement, un utilisateur 10 est en communication avec une autorité d'enregistrement (A.E.) 12, qui est en communication avec une autorité de certification (A.C.) 14. L'A.E. 12 sur la figure 1A peut être un fournisseur de services (F.S.), ou une autre autorité d'enregistrement appropriée. L'A.C.14 conserve une base de données de certificats 16 qui enregistré des informations concernant chacun des certificats délivrés par l'A.C. 14 et à laquelle peut accéder l'utilisateur 10. Les communications entre la base de données de certificats 16 et l'A.C. 14 et / ou l'utilisateur 10 peuvent être effectuées via une liaison d'intercommunication sécurisée afin de préserver l'intégrité des données stockées dans la base de données 16. Les communications entre l'utilisateur 10 et l'A.E. 12 peuvent s'effectuer par le biais d'une voie de communication sécurisée. Par exemple, l'utilisateur 10 peut communiquer avec l'A.E. 12 et l'A.C. 14 au moyen d'un réseau de systèmes homologues, dans lequel une liaison d'intercommunication directe est fournie entre l'utilisateur 10 et l'A.E. 12. De plus, l'utilisateur peut communiquer par le biais d'un réseau ouvert, tel que l'Internet, par exemple. Dans un tel cas, les communications pourraient être cryptées. Un exemple d'une technique où les communications entre l'utilisateur 10 et l'A.E. 12 pourraient être cryptées via un réseau ouvert consiste à utiliser le protocole SSL (SSL) créé par Netscape Communications Corporation, de Mountain View, Californie.

De surcroît, les communications entre l'A.E. 12 et l'A.C. 14 pourraient être réalisées en utilisant soit une liaison sécurisée, une liaison directe (par ex. une liaison de communication d'égal à égal), soit une liaison sécurisée via un réseau ouvert (par ex., une liaison SSL). En raison du caractère sensible des données enregistrées dans la base de données de certificats 16, les communications entre l'A.C. 14 et la base de données 16 sont généralement réalisées en utilisant une liaison sécurisée afin de protéger l'intégrité des données conservées au sein de la base de données.

En référence aux étapes illustrées sur la figure 1B, un utilisateur 10 doit demander un certificat dans la phase un de l'évolution de l'I.C.P., tel qu'illustré à l'étape 18. Cette demande est transmise à l'A.E. 12 qui détermine, à l'étape 20, si cette demande de l'utilisateur sera satisfaite ou non. Si l'A.E. 12 n'approuve pas la demande de l'utilisateur, l'utilisateur peut en être informé en option, comme l'illustre l'étape optionnelle 21, et tout le processus s'achève à l'étape 22. Si, par ailleurs, l'A.E. 12 approuve la demande de l'utilisateur à l'étape 20, cette approbation est transmise à l'A.C. 14 à l'étape 23. L'A.C. 14 enregistre alors les informations relatives au certificat de l'utilisateur dans la base de données 16 à l'étape 24. Une fois que les informations relatives au certificat de l'utilisateur ont été enregistrées dans la base de données 16, l'A.C. 14 délivre un certificat pour l'utilisateur 10 à l'étape 26, et informe l'utilisateur que le certificat est enregistré dans la base de données de certificats 16. L'utilisateur obtient de nouveau certificat, comme il est montré à l'étape 27.

L'un des inconvénients majeurs associés au modèle de la phase un de l'évolution de l'I.C.P. illustré sur la figure 1A est la charge imposée à l'utilisateur 10. Dans ce modèle, l'utilisateur 10 est prié de demander un certificat et doit ensuite recevoir le certificat qui doit généralement être, dans la phase un de l'évolution de l'I.C.P., volontairement installé par l'utilisateur 10 avant de pouvoir authentifier une transaction. Parce que ce modèle exige de nombreux actes d'affirmation de la part de l'utilisateur 10, la phase un de l'évolution de l'I.C.P. a connu un succès limité.

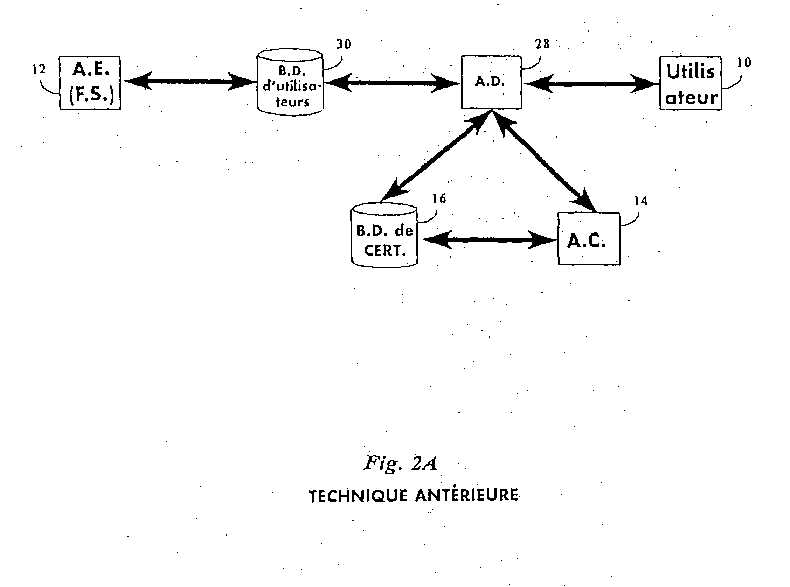

La phase deux de l'évolution de l'I.C.P. est destinée à réduire les exigences draconiennes posées à l'utilisateur par la phase un de l'évolution de l'I.C.P. Spécialement, comme l'illustre la figure 2A, une autorité de délivrance (A.D.) 28 agit comme intermédiaire demandant un certificat de l'A.C. 14 pour le compte de l'utilisateur 10 et de l'A.E. 12. Dans la phase deux, comme dans la phase un, l'A.E. 12 peut être un fournisseur de services (F.S.), ou une autre autorité d'enregistrement adéquate. Une A.E. 12 conserve des données d'utilisateurs au sein d'une base de données d'utilisateurs 30. On peut accéder à ces données d'utilisateurs par le biais de l'A.D. 28 en formant des demandes de certificats pour le compte de chaque utilisateur figurant dans la base de données d'utilisateurs 30. En raison du caractère sensible des données enregistrées dans la base de données d'utilisateurs 30 et de la nécessité d'assurer sa sécurité, les communications entre l'A.E. 12, l'A.D. 28 et la base de données 30 sont généralement effectuées au moyen d'une liaison d'intercommunication sécurisée.

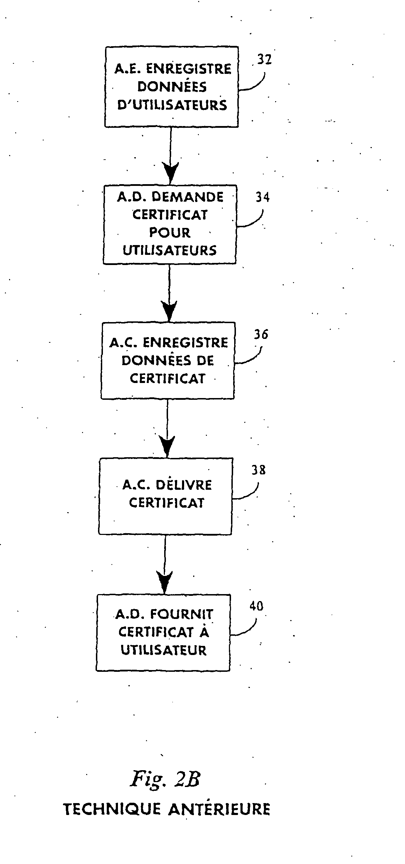

Les étapes spécifiques associées à la phase deux de l'évolution de l'I.C.P. sont illustrées sur la figure 2B. Premièrement, à l'étape 32, l'A.E. 12 enregistre des informations concernant les divers utilisateurs 10 dans la base de données d'utilisateurs 30. L'A.E. 12 sur le schéma fonctionnel de la figure 2A peut comprendre, par exemple, des banques, des opérateurs GSM et d'autres organismes auxquels l'utilisateur 10 est associé, et pour lesquels l'A.E. RA 12 conserve des informations sur les clients. L'A.D. 28 accède aux données d'utilisateurs contenues au sein de la base de données 30 et forme une demande de certificat pour le compte de l'utilisateur 10 à l'étape 34. A la réception de la demande de l'A.D. 28, l'A.C. 14 enregistre les données de certificat dans la base de données de certificats 16, à l'étape 36, et délivre un certificat pour le compte de l'utilisateur 10 à l'A.D. IA 28, à l'étape 38. L'A.D. 28 fournit ensuite le certificat à l'utilisateur 10 à l'étape 40.

Ainsi, dans la phase deux de l'évolution de l'I.C.P., l'utilisateur 10 n'est pas tenu de demander le certificat, qui est demandé pour le compte de l'utilisateur puis transmis à l'utilisateur dans un jeton sécurisé ou par le biais d'une liaison d'intercommunication sécurisée. La phase deux de l'évolution de l'I.C.P. utilisait souvent des certificats numériques contenus dans des dispositifs, tels que des cartes à puces, permettant aux clients d'utiliser des modèles de sécurité familiers et éliminant le besoin de tout effort supplémentaire de la part des clients soit pour demander un certificat, soit pour mettre son utilisation en oeuvre.

Particulièrement, dans le domaine des cartes à puce, par exemple, parce qu'un certificat est contenu dans un dispositif, un utilisateur pourrait recevoir un tel dispositif d'une manière familière à la fois pour le client et l'institution émettrice. En surface, une telle délivrance semble être la même que la délivrance d'une carte de transactions bancaires pour distributeur automatique de billets, d'une carte de débit, d'une carte de crédit ou similaire. Qui plus est, l'utilisation du certificat numérique lié au dispositif est également transparente pour l'utilisateur dans la phase deux de l'évolution de l'I.C.P. et ne requiert de la part de l'utilisateur aucun effort associé à l'obtention d'un certificat. Cela signifie que, lorsqu'une carte à puce est activée, un utilisateur est prié d'entrer un mot de passe, ou un numéro d'identification personnel, qui est similaire aux exigences liées à l'utilisation d'un distributeur automatique de billets ou d'une carte de crédit. Une fois que l'utilisateur a entré ce code d'accès, tout cryptage et toute authentification au moyen de clés cryptographiques publiques et/ou privées et de certificats numériques sont réalisés automatiquement, sans aucun effort supplémentaire de la part de l'utilisateur.

La facilité de déploiement de certificats de dispositifs par des entités existantes désirant des communications sécurisées et authentifiées via un réseau ouvert est tout aussi importante. De telles entités peuvent inclure, par exemple, des organismes financiers, gouvernementaux et de protection de la santé. Parce que les certificats de dispositifs sont destinés à être utilisés au sein de systèmes existants, comme les distributeurs automatiques de billets susmentionnés, cela demande peu d'effort, voire aucun, de la part des institutions pour déployer des certificats de dispositifs. En raison de l'effort minimal requis de la part de l'utilisateur, la phase deux de l'évolution de l'I.C.P. a connu un succès un peu plus important que la phase un. Toutefois, dans la phase deux, si le certificat était délivré sous forme de logiciel, l'utilisateur était toujours tenu d'utiliser consciemment le certificat, ce qui demandait souvent d'installer un logiciel d'authentification et similaire.

De plus, la phase deux posait un problème, dans la mesure où l'utilisateur devait être connu lors de la fabrication du dispositif. Par conséquent, étant donné qu'il existe des réseaux dans lesquels l'utilisateur d'un dispositif n'est pas connu lors de la fabrication du dispositif (par ex., des réseaux de télécommunications), l'utilisation du modèle de la phase deux n'est pas toujours possible. De ce fait, la phase trois de l'évolution de l'I.C.P. a été développée, mettant en oeuvre l'utilisation de certificats de dispositifs. Les certificats de dispositifs de la phase trois ont été créés pour permettre d'ajouter des informations sur l'utilisateur à un dispositif sécurisé via un réseau ouvert. Ces informations pouvaient être ajoutées sans connaître au préalable l'identité de l'utilisateur et pouvaient être ajoutées après la fabrication du dispositif.

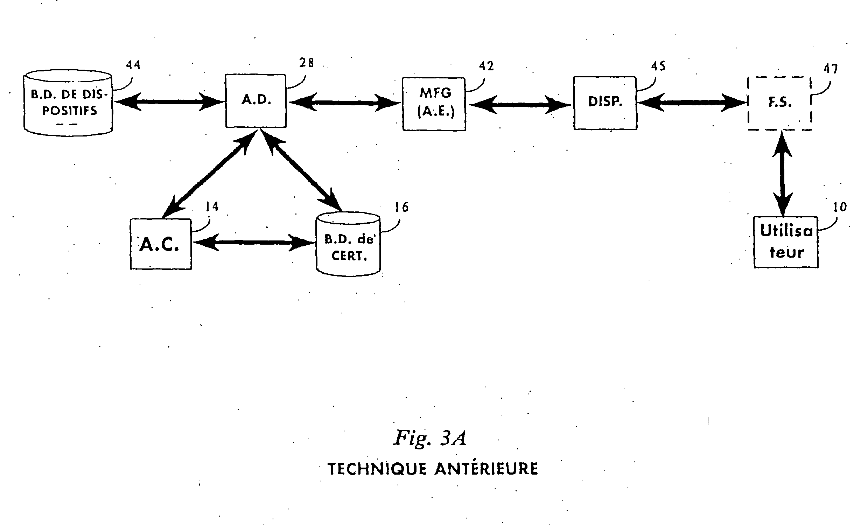

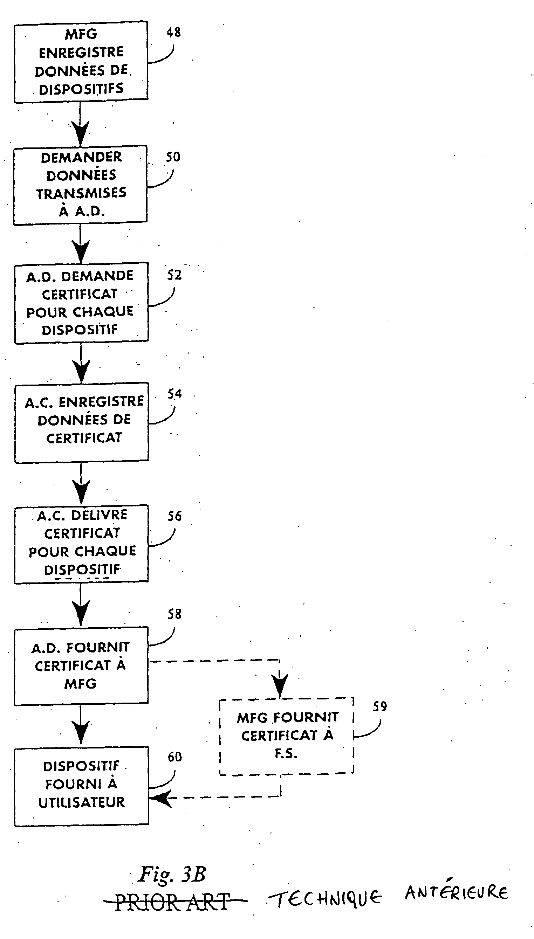

Le schéma fonctionnel représenté sur la figure 3A illustre les éléments impliqués dans la phase trois de l'évolution de l'I.C.P. et les éléments associés à un mode de réalisation de la présente invention. L'organigramme représenté sur la figure 3B illustre les étapes associées à la phase trois de l'évolution de l'I.C.P. et va être traité en liaison avec la figure 3A.

Dans la phase trois de l'évolution de l'I.C.P., les certificats étant liés à des identificateurs de dispositifs au moment de la fabrication, le fabricant (MFG) 42 joue un rôle important dans l'attribution des certificats. Une fonction importante que le fabricant 42 remplit consiste à conserver des données relatives à chacun des dispositifs dans une base de données de dispositifs 44. Ces données relatives à chacun des dispositifs sont utilisées pour relier des informations cryptographiques à des informations sur les dispositifs par le biais d'un certificat. De surcroît, dans la phase trois, le MFG 42 peut agir en tant qu'autorité d'enregistrement (c.-à-d. exécute des fonctions similaires à l'A.E. 12, tel qu'il est représenté sur les figures 1A et 2A). L'A.D. 28 communique avec chaque dispositif (DEV) 45, qui peut être distribué en option via un fournisseur de services (F.S.) 47.

La figure 3B présente un organigramme illustrant les étapes associées à l'obtention, par l'utilisateur, d'un dispositif comportant un certificat y afférant dans la phase trois de l'évolution de l'I.C.P. Premièrement, le fabricant 42 enregistre des informations concernant chaque dispositif fabriqué dans une base de données de dispositifs 44 à l'étape 48. L'A.D. 28 accède à ces informations enregistrées dans la base de données de dispositifs 44 à l'étape 50. Une fois ces données reçues, l'A.D. 28 demande à l'étape 52 des certificats individuellement pour chaque dispositif dont il a accédé aux données à partir de la base de données de dispositifs 44. Cette demande est faite par l'A.C. 14, qui à l'étape 54, enregistre les données de certificats à délivrer dans la base de données de certificats 16, et à l'étape 56, délivre des certificats pour chaque dispositif à l'A.D. 28, associant ainsi des certificats individuels à des dispositifs individuels 45. À l'étape 58, l'A.D. 28 délivre les certificats pour chacun des dispositifs au fabricant 42. De manière optionnelle, le fabricant 42 peut fournir le certificat au fournisseur de services 47, tel qu'il est montré à l'étape optionnelle 59. A son tour, le fabricant 42 (ou en option le F.S. 47) fournit les dispositifs à l'utilisateur 10 à l'étape 60. Il sera reconnu par les spécialistes de la technique qu'il est souvent fait appel à un intermédiaire, tel qu'un détaillant, fournisseur de services, ou similaire, pour fournir aux utilisateurs des dispositifs du fabricant de dispositifs.

Comme il a été traité ci-dessus, la phase trois de l'évolution de l'I.C.P. est avantageuse pour plusieurs raisons, notamment la transparence de tout le processus de demande, réception et utilisation d'un certificat pour des utilisateurs soit connus, soit inconnus, au moment de la fabrication des dispositifs. Néanmoins, comme il a été précédemment souligné, l'un des inconvénients majeurs de la phase trois de l'évolution de l'I.C.P. est le coût associé à l'attribution de certificats à des dispositifs individuels qui sont fabriqués en série qui, contrairement au coût relativement insignifiant des certificats uniques assumé par l'utilisateur dans la phase un, est multiplié de nombreuses fois et généralement assumé par le fabricant ou le fournisseur de services et s'avère donc relativement élevé, comparé aux certificats uniques délivrés à des utilisateurs individuels.

Qui plus est, les frais dans la phase trois de l'évolution de l'I.C.P. deviennent encore plus considérables en raison du processus essentiellement transparent de demande de certificats. Particulièrement, à la différence de la phase un où les utilisateurs éprouvaient de la réticence à demander des certificats en raison de l'effort important requis, avec l'apparition du processus sensiblement transparent de la phase trois de l'évolution de l'I.C.P., beaucoup plus d'utilisateurs sont susceptibles de recevoir et d'utiliser potentiellement des certificats. En outre, dans la phase trois, chaque utilisateur peut exiger de multiples certificats pour chacun de ses dispositifs, alors que les mêmes utilisateurs ne demandaient peut-être qu'un seul certificat dans la phase un de l'évolution de l'I.C.P. En raison de tous ces facteurs, le coût associé à la phase trois de l'évolution de l'I.C.P. est devenu une considération cruciale dans les modèles commerciaux, et est devenu excessivement lourd à assumer dans de nombreux cas pour les fabricants et / ou les fournisseurs de services.

En conséquence, la présente invention traite les problèmes soulevés par rapport aux trois premières phases de l'évolution de l'I.C.P., tout en offrant à l'utilisateur tous les avantages et facilités dont jouissent les utilisateurs employant des certificats émis de la façon relativement transparente de la phase trois de l'évolution de l'I.C.P. Plutôt que d'associer des certificats à des dispositifs individuels, la présente invention permet d'associer les certificats à un groupe de dispositifs, tel qu'une série ou un lot de fabrication. Ainsi, quand les dispositifs sont fabriqués en séries ou lots de nombres relativement élevés (par ex., environ 10 000 dispositifs), le coût lié aux certificats pour les dispositifs, lorsqu'il est divisé entre tous les dispositifs d'une série de fabrication, devient négligeable. Par conséquent, l'effort minimal requis de la part des utilisateurs pour acquérir et utiliser des certificats allant de pair avec le coût minimal supporté par les fabricants pour fournir de tels certificats, la présente invention facilite considérablement le commerce électronique, tel que le commerce via l'Internet, le commerce mobile ou similaire.

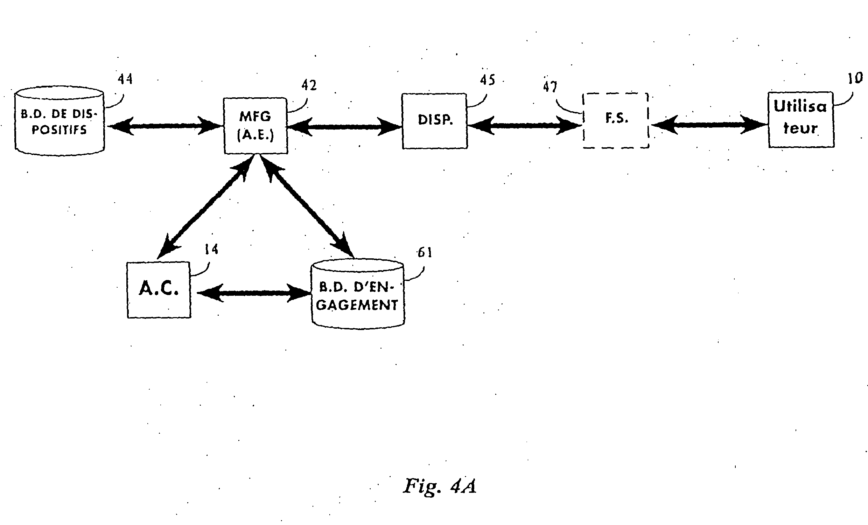

Un schéma fonctionnel d'un mode de réalisation de la présente invention est présenté sur la figure 4A. Sur la figure 4A, le fabricant (MFG) 42, qui maintient la base de données de dispositifs 44 et communique avec l'A.C. 14, selon un mode de réalisation de la présente invention, agit en qualité d'autorité d'enregistrement (A.E.). L'A.C. 14 maintient une base de données d'engagement 61, dans laquelle peut être stocké un enregistrement permanent, ou manifeste, de tous les dispositifs 45 associés à un certificat particulier. Les dispositifs 45 sont ensuite distribués pour être envoyés aux utilisateurs par le fabricant 42, ou en option par le fournisseur de services 47.

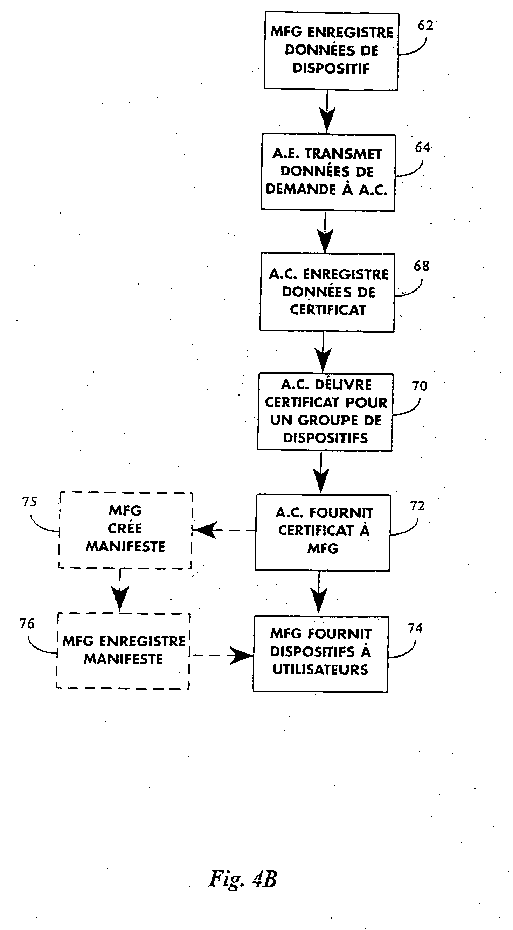

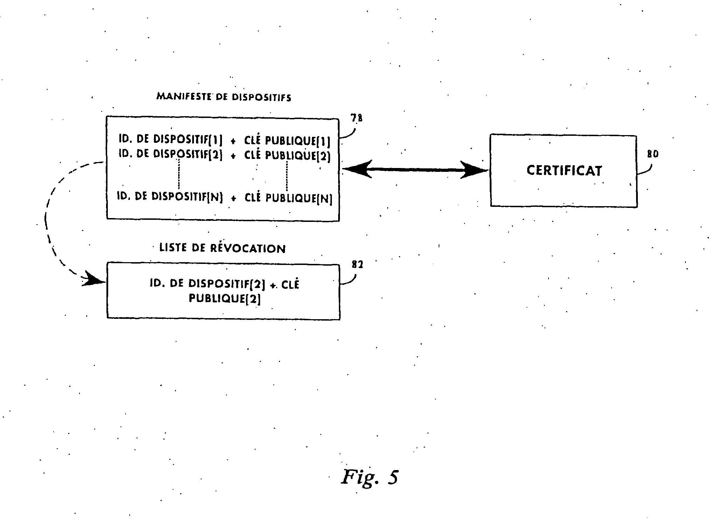

L'organigramme illustré sur la figure 4B met en évidence diverses étapes associées à un mode de réalisation de la présente invention. Particulièrement, les étapes mises en lumière sur la figure 4B illustrent la manière dont un groupe de dispositifs est associé à un seul certificat, et le certificat est émis pour un groupe de dispositifs 45. Premièrement, le fabricant 42 enregistre des données de dispositifs dans une base de données de dispositifs 44, à l'étape 62. L'A.E. 12 à l'étape 64, transmet des données de dispositifs qui ont été obtenues, à partir de la base de données de dispositifs 44, à l'A.C. 14, demandant un seul certificat pour un groupe de dispositifs. L'A.C. 14 enregistre ensuite les données du certificat à l'étape 68, émet un certificat pour le groupe de dispositifs à l'étape 70 et émet un certificat de groupe à l'étape 70, qu'elle fournit au fabricant 42 à l'étape 72, associant ainsi le certificat à un groupe de dispositifs. Une fois que le fabricant 42 a reçu le certificat pour le groupe de dispositifs, il peut alors fournir des dispositifs aux utilisateurs, tel qu'il est énoncé à l'étape 74. De manière optionnelle, le fabricant à l'étape 76 peut également créer un manifeste, qui est décrit plus en détail ci-dessous en référence à la figure 5.

Le manifeste peut aussi être enregistré, en option, par le fabricant dans une base de données d'engagement 61 à titre de référence future. Selon un mode de réalisation de la présente invention, la base de données d'engagement 61, illustrée sur la figure 4A, peut être utilisée par le fabricant 42 pour tenir un manifeste, tel que celui décrit en rapport avec la figure 5 ci-dessous, associant les informations sur les certificats et les lots de dispositifs dans un enregistrement permanent (par ex. dans l'engagement).

La figure 5 illustre un manifeste de dispositifs 78, qui indique l'identificateur de dispositifs et la clé publique apparentée à chaque dispositif au sein du groupe ou lot de dispositifs liés à un certificat 80, selon un mode de réalisation de la présente invention. Ce manifeste 78 peut être créé par le fabricant 42 au moment où le certificat pour un groupe de dispositifs est reçu de l'A.C. 14, ou peut être créé de manière optionnelle par l'A.C. 14 ou un notaire numérique. Le manifeste 78 est stocké en tant qu'enregistrement permanent dans une base de données de manifeste 61, qui est illustrée sur la figure 4A, comme preuve des dispositifs appartenant à l'origine au groupe figurant dans le manifeste 78, qui sont liés au certificat 80. De même, au moment de la création du manifeste 78, le fabricant 42 (ou l'A.C. 14) peut créer en option une liste de révocation ou liste rouge 82, qui contient des dispositifs qui ne sont plus opérationnels, ou pour lesquels le certificat 80 a été révoqué.

Au moment de la création par le fabricant 42 (ou l'A.C. 14), la liste de révocation 82 peut être vide. Toutefois, au fil du temps, lorsque les dispositifs sont perdus, volés ou mis hors service, leurs identificateurs, tout comme leur clé publique, sont ajoutés à la liste de révocation 82 à des fins d'identification future (par ex., lorsque l'authentification de dispositifs est refusée). Par exemple, dans la situation illustrée sur la figure 5, le deuxième dispositif (dispositif [2]) figurant dans le manifeste 78 qui utilise l'identificateur de dispositif 2 figure également sur la liste de révocation 82. Ainsi, à chaque fois que le dispositif identifié par l'identificateur de dispositif 2 est utilisé, une agence d'authentification reconnaîtra que le dispositif (dispositif [2]) n'a plus le droit d'utiliser le certificat 80, pour quelque raison que ce soit, parce qu'il fait partie de la liste de révocation 82 même s'il apparaît toujours dans le manifeste 78. Au moyen d'une liste de révocation 82, le manifeste 78 peut être tenu comme une liste permanente des dispositifs existant encore au moment où le certificat 80 est relié au groupe de dispositifs figurant dans le manifeste 78. Parce que cette liste est permanente et n'a pas été modifiée, il est quasiment certain que son contenu est juste. La liste de révocation 82 sera certifiée ou notarisée et peut être distribuée à diverses agences qui suivent la révocation des certificats numériques.

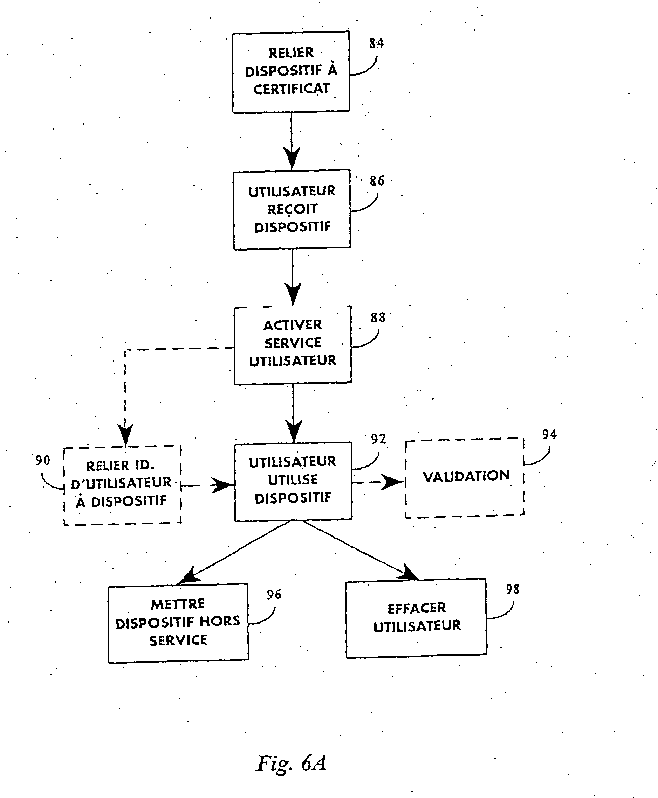

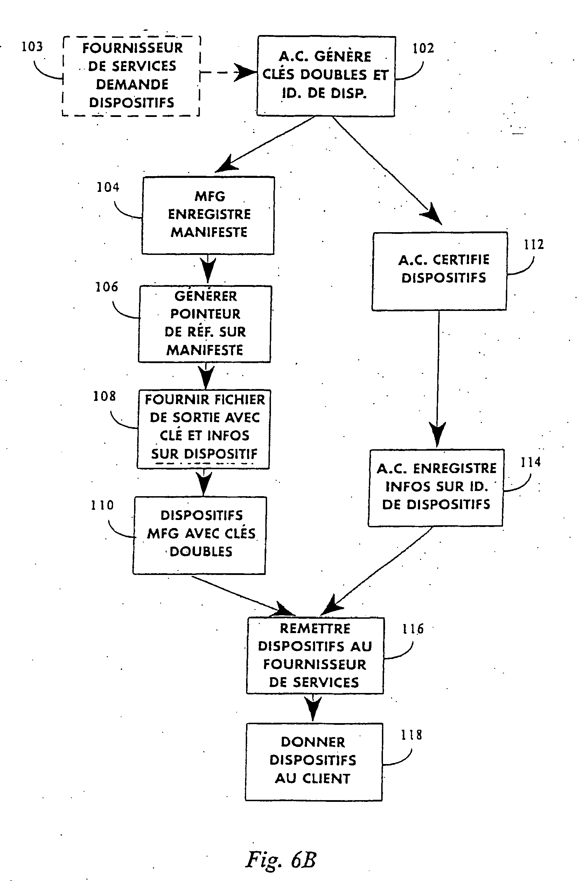

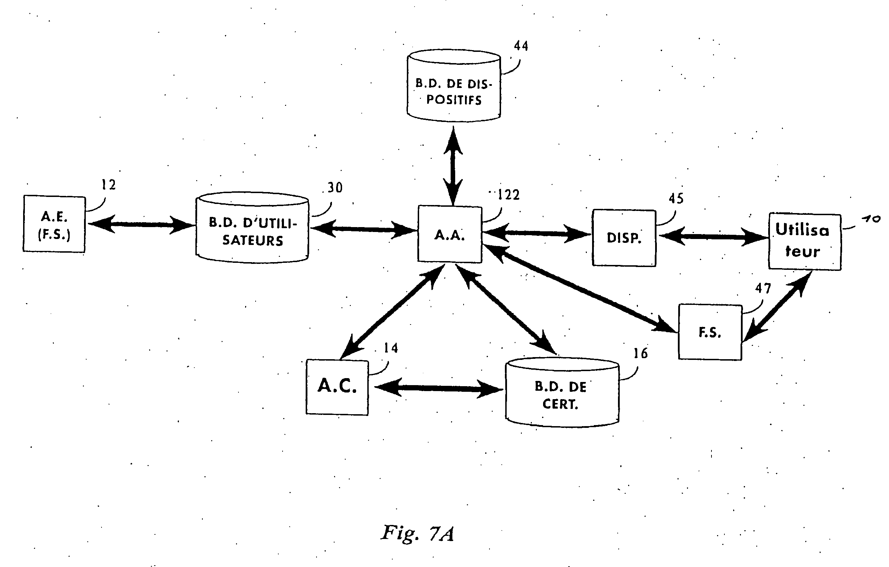

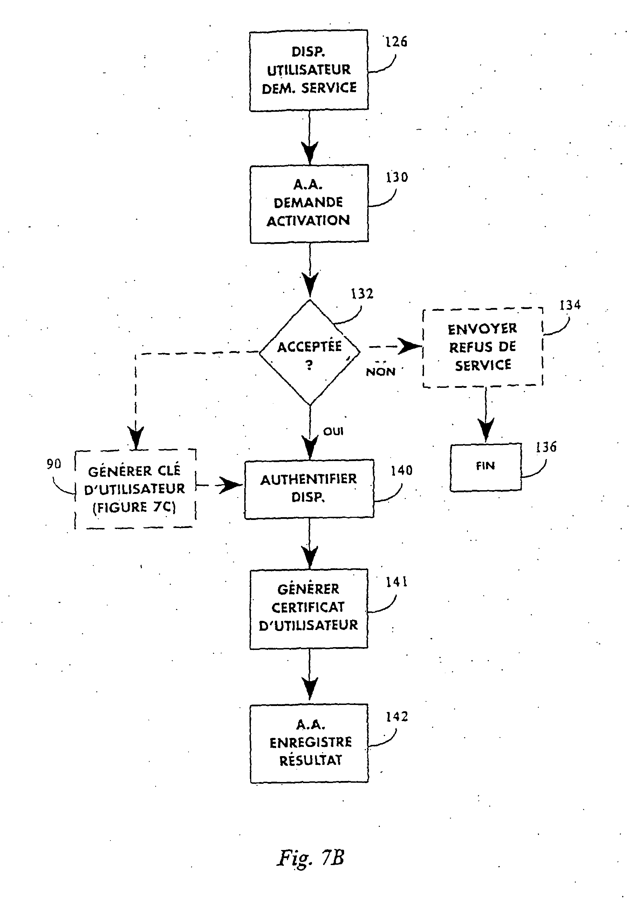

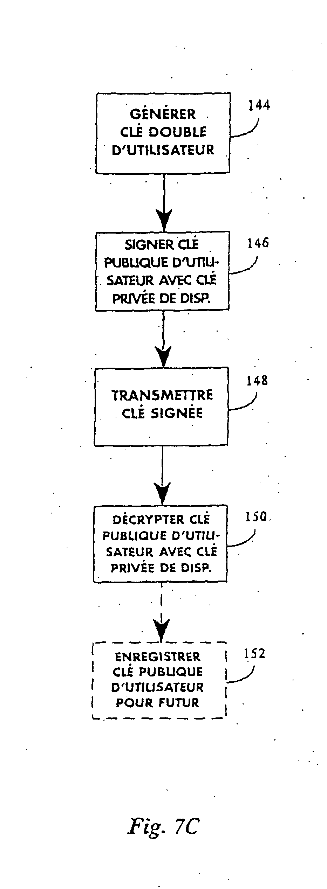

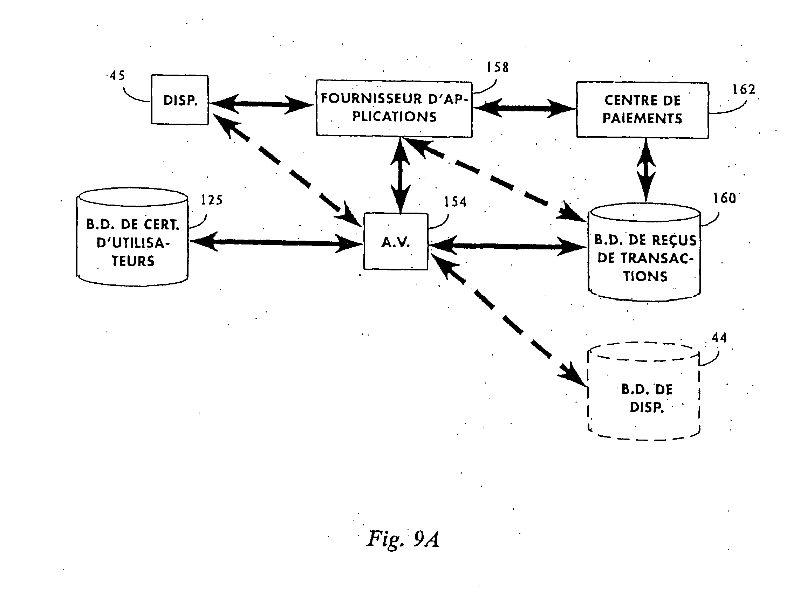

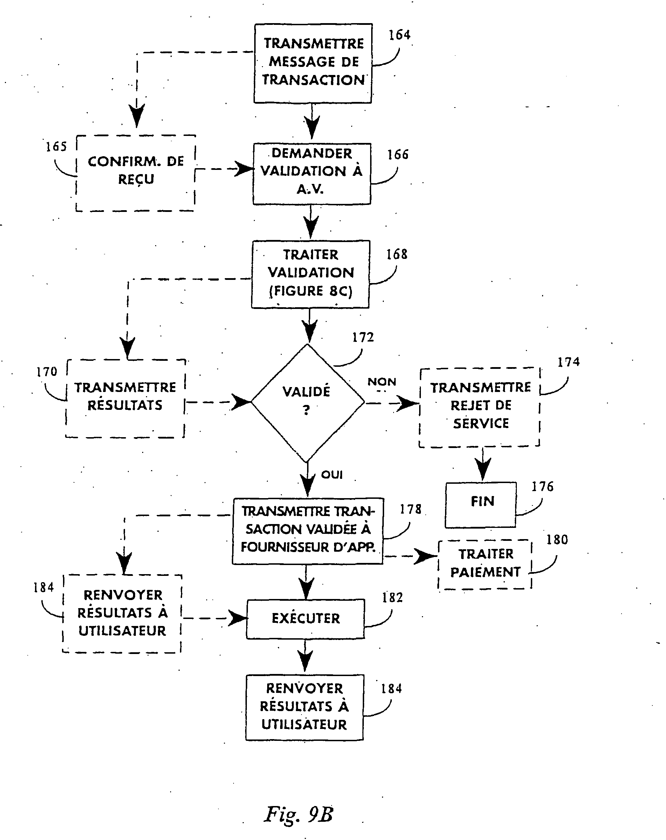

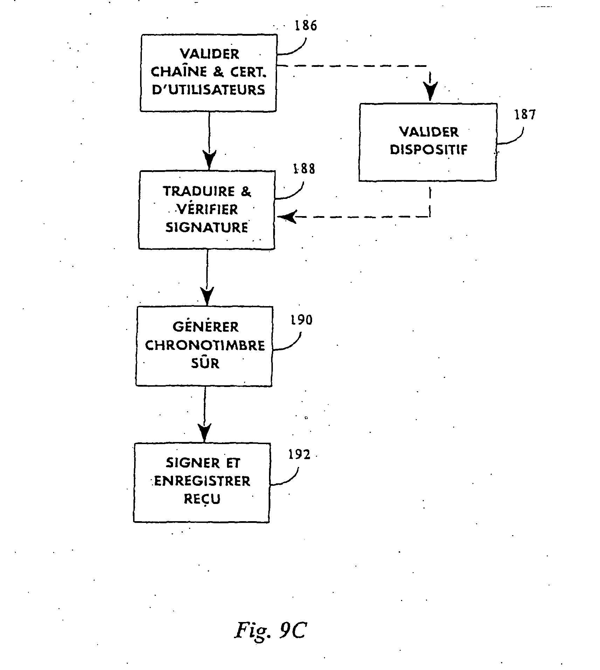

Diverses phases de l'utilisation des certificats liés à des groupes de dispositifs selon la présente invention sont illustrées sur la figure 6A. Sur la figure 6A, un dispositif est d'abord associé au certificat d'une partie d'un groupe de dispositifs à laquelle il appartient à l'étape 84, laquelle étape est décrite plus en détail en relation avec les figures 4A et 4B. Une fois que le dispositif a été associé au certificat, par le biais du groupe de dispositifs, l'utilisateur reçoit le dispositif à l'étape 86, laquelle étape est décrite plus en détail ci-dessous en relation avec la figure 6B. Une fois que l'utilisateur a reçu le dispositif, l'utilisateur peut alors activer un service à l'étape 88, laquelle étape est traitée plus en détail ci-dessous en relation avec les figures 7A et 7B. En option, l'identité de l'utilisateur peut être reliée au dispositif, tel qu'il est montré à l'étape optionnelle 90, qui est traitée plus en détail en relation avec la figure 7C. L'utilisateur utilise ensuite le dispositif à l'étape 92 et la validation peut être effectuée à l'étape 94 pour garantir que le dispositif est authentique et ne fait pas partie d'une liste de révocation ou liste rouge, ou est traité ci-dessous en relation avec les figures 9A, 9B et 9C.

Une fois que le dispositif a rempli sa durée de vie utile, il est mis hors service à l'étape 96. Des informations sur l'utilisateur peuvent être stockées dans un enregistrement séparé tenu par un fournisseur de services ou d'autres autorités demandant et peuvent ne pas être nécessairement reliées au dispositif. Parce que l'identité de l'utilisateur peut ne pas être liée au dispositif par un mécanisme séparé à l'étape 90, l'effacement des informations sur le dispositif du système peut s'avérer insuffisant, mais une étape supplémentaire 98 peut également être requise, dans laquelle l'identité de l'utilisateur est effacée du système. Toutefois, les spécialistes de la technique reconnaîtront que les deux peuvent ne pas être nécessaires. Par exemple, si un utilisateur perd son dispositif, le dispositif peut requérir une mise hors service, ou plutôt l'identificateur du dispositif peut avoir besoin d'être placé sur la liste de révocation ; cependant, l'identité de l'utilisateur peut être encore valide et il peut être possible.d'associer les mêmes informations sur l'utilisateur à un autre dispositif. Ainsi, il s'avèrerait inutile d'effacer les informations sur l'utilisateur. Par opposition, si un utilisateur décède ou déménage hors de la plage de service assurée par le dispositif, il peut être nécessaire d'effacer les informations sur l'utilisateur à l'étape 98 ; néanmoins, le dispositif peut demeurer entièrement fonctionnel. Dans un tel cas, il peut être souhaitable non pas de mettre le dispositif en service, mais d'associer une nouvelle identité d'utilisateur au même dispositif.

Une variété de services, comme la téléphonie mobile (par ex., GSM), les transactions sur l'Internet par cartes à puce, les applications sur l'Internet sans fil, et similaire, peuvent être utilisés en relation avec le présent mode de réalisation, tel que le mode de réalisation illustré sur la figure 4A. Il sera reconnu que, selon le type d'application pour lequel le modèle représenté sur la figure 4A est utilisé, divers éléments de ce système peuvent être légèrement adaptés pour l'application désirée. Par exemple, le fournisseur de services 47 peut être un fournisseur de services de téléphonie mobile (par ex., un opérateur GSM), un fournisseur d'Internet sans fil, ou similaire.

L'organigramme de la figure 6B illustre les étapes associées à la distribution de dispositifs à des utilisateurs selon divers modes de réalisation de la présente invention. Premièrement, un certain nombre de couples de clés et d'identificateurs de dispositifs, qui sont respectivement associés à des dispositifs devant être fabriqués par le fabricant 42 et figurent généralement sur une liste de dispositifs, sont générés à l'étape 102. Cette étape de génération 102 peut être réalisée par l'A.C. 14 ou le MFG 42 agissant comme autorité d'enregistrement en réponse à une demande par le fournisseur de services 47, qui est illustrée comme une étape optionnelle 103. Le fabricant 42 enregistre un manifeste de listes de dispositifs à l'étape 104, permettant d'établir la correspondance entre les clés générées et chaque dispositif au sein de la liste de dispositifs. Il sera reconnu par les spécialistes de la technique que les couples de clés, au lieu d'être générées par l'A.C. 14 ou le MFG 42, pourraient être générées par le fournisseur de services 47. De surcroît, les couples de clés pourraient être générés par un module de sécurité de matériel (M.S.M.), qui génère les couples de clés à l'intérieur du matériel plutôt que du logiciel, ladite génération dans le matériel étant beaucoup plus fiable et imperméable aux attaques (par ex. par des pirates, etc.). Le M.S.M. peut appartenir au MFG 42, à l'A.C. 14, au F.S. 47, ou peut être opéré par d'autres entités sécurisées.

À l'étape 106, un pointeur de référence sur le manifeste, stocké à l'étape 104, est généré. Le pointeur de référence sur le manifeste généré à l'étape 106 est un pointeur qui spécifie le manifeste où figure le dispositif, ainsi que l'emplacement de ce dispositif à l'intérieur du manifeste, qui peut être présenté sous la forme combinée d'un identificateur de manifeste et d'un décalage de dispositif. Un fichier de sortie est fourni au fournisseur de services 47 à l'étape 108 contenant les informations sur la clé publique générée à l'étape 102, le pointeur de référence sur le manifeste généré à l'étape 106 et les informations sur les dispositifs auxquelles sont associées les informations sur les clés . Selon un mode de réalisation de la présente invention, seule la clé publique associée à chaque dispositif est fournie au fournisseur de services 47, maintenant ainsi la clé privée secrète enregistrée à l'intérieur du matériel du dispositif lui-même.

Les dispositifs 45 sont ensuite fabriqués à l'étape 110 par le fabricant 42. Comme il a été précédemment mentionné, selon un mode de réalisation de la présente invention, les clés privées générées à l'étape 102 et le pointeur de référence sur le manifeste généré à l'étape 106 sont enregistrés dans le matériel de chaque dispositif. Les spécialistes de la technique reconnaîtront qu'une variété de mesures de protection peut être employée pour enregistrer les informations sur les clés cryptographiques publiques et privées dans le matériel d'un dispositif. Toute méthode sécurisée adaptée pour enregistrer de telles informations sur les clés peut être employée dans le cadre de la présente invention.

Indépendamment des étapes 104, 106, 108, et 110, étant effectuées par le fabricant 42, l'A.C. 14 a opéré pour certifier les dispositifs. L'A.C. 14 certifie les dispositifs sur la liste de dispositifs à l'étape 112 et enregistre les informations d'identification des dispositifs dans une base de données de dispositifs 44 à l'étape 110. Ces informations d'identification des dispositifs enregistrées dans la base de données de dispositifs 44 sont disponibles pour valider ultérieurement chaque dispositif lors de son utilisation dans des activités commerciales.

Le fabricant 42 remet alors les dispositifs au fournisseur de services 47 à l'étape 116 et le fournisseur de services 47 remet les dispositifs au client, ou à l'utilisateur 10, à l'étape 118. Dans le cas d'un système de téléphonie mobile GSM, le fournisseur de services 47 (c.-à-d. l'opérateur GSM) fournit une carte SIM à un client, que le client peut ensuite utiliser dans un téléphone GSM et le fabricant 42 est le fabricant de la carte SIM. Dans le cas d'une carte à puce devant être utilisée comme partie d'une carte de crédit, pour des transactions en ligne sécurisées, et similaire, le fournisseur de services 47 peut être une société de cartes de crédit et le fabricant 42 pourrait être un fabricant de cartes à puce. Ainsi, l'utilisateur final 10 agit comme il ou elle a fait par le passé avec le fournisseur de services, et l'infrastructure sous-jacente fournit la capacité de sécurité sous la forme d'une carte à puce, d'une carte SIM ou d'un dispositif similaire, qui est associé(e) à un certificat numérique par le biais d'un groupe de dispositifs, la structure sous-jacente étant transparente pour l'utilisateur.

Une fois que le dispositif a été délivré à un utilisateur, l'utilisateur doit alors activer le dispositif avant de s'en servir. Le système dans lequel le dispositif est activé est illustré sous la forme d'un schéma fonctionnel sur la figure 7A. Les étapes associées à l'utilisation du système illustré sur la figure 7A sont énumérées dans l'organigramme illustré sur la figure 7B et seront traitées en relation avec la figure 7A.

Sur la figure 7A, le système dans lequel un dispositif d'utilisateur 45 est activé est illustré. Le système fait appel à une autorité d'activation (AA) 122, qui communique avec les dispositifs 45, la base de données de dispositifs 44, la base de données d'utilisateurs 30, la base de données de certificats 16 et l'A.C. 14. L'A.A. 44 peut en option être connectée à un F.S. 47. L'A.C. 14 enregistre des informations concernant les certificats des utilisateurs dans la base de données de certificats 16. Une A.E. 12, qui peut être de manière optionnelle un fournisseur de services, est configurée pour accéder à la base de données d'utilisateurs.

L'activation est commencée quand un utilisateur demande l'activation du service auprès du fournisseur de services 47, comme il est montré à l'étape 126 de la figure 7B, par le biais de divers moyens comprenant le dispositif de l'utilisateur 45, le service du téléphone, l'Internet, ou en personne. Le F.S. 47 demande ensuite à l'A.A. 122 d'activer le service en utilisant la passerelle pour le compte du dispositif de l'utilisateur 45, qui peut, selon un mode de réalisation de la présente invention, inclure un protocole d'application sans fil (WAP) ou une passerelle sur voie radio (OTA). À l'étape 132, il est déterminé si oui ou non la demande d'activation sera acceptée. Si la demande d'activation n'est pas acceptée, un message de refus peut alors être envoyé en option à l'A.A. 122, tel qu'il est illustré à l'étape optionnelle 134. Puis, le processus s'achève à l'étape 136. Si, d'un autre côté, la demande d'activation est acceptée, alors une chose sur deux peut se produire. Soit le dispositif peut être directement authentifié à l'étape 140, soit l'étape optionnelle pour générer une clé d'utilisateur à l'étape optionnelle 138 peut survenir avant que le dispositif ne soit authentifié à l'étape 140. La manière dont le couple de clés d'utilisateur est généré à l'étape 138 est illustrée plus en détail sur la figure 7C. Une fois le dispositif authentifié, un certificat d'utilisateur est généré à l'étape 141 et l'A.A. 122 envoie les résultats au F.S. 47 à l'étape 142.

Les étapes associées à la génération d'un couple de clés d'utilisateur, selon un mode de réalisation de la présente invention, sont illustrées sur l'organigramme présenté sur la figure 7C. Une fois que le dispositif de l'utilisateur 120 a été activé par l'utilisateur, ce qui peut inclure, par exemple, l'entrée d'un numéro d'identification personnel, d'un mot de passe ou d'un code d'accès, un couple de clés d'utilisateur est généré à l'étape 144 au sein du matériel du dispositif 120. Parce que le couple de clés d'utilisateur est généré à l'intérieur du matériel, il est plus sécurisé et moins susceptible d'être copié qu'un couple de clés de logiciel. Toutefois, on reconnaîtra que d'autres techniques de génération de clés pourraient être mises en oeuvre au sein de la présente invention, avec des degrés variables de sécurité. Le dispositif 120 signe alors la clé publique d'utilisateur, générée à l'étape 144, avec la clé privée de dispositif à l'étape 146. Cette clé publique d'utilisateur signée est ensuite transmise à l'étape 148, et une fois reçue par l'A.A. 122, ou une autre autorité de réseau impliquée dans l'identification de dispositifs, elle est décryptée à l'étape 150, à l'aide de la clé publique de dispositif. De façon optionnelle, comme il apparaît à l'étape 152, la clé publique d'utilisateur peut être enregistrée dans une base de données de systèmes à titre de référence future lors de transactions futures (par ex., à des fins d'authentification). Ces certificats d'utilisateurs sont enregistrés au sein de la base de données de certificats d'utilisateurs 125.

Grâce à la technique décrite ci-dessus, l'entité décryptant la clé publique d'utilisateur est quasiment certaine que le couple de clés d'utilisateur a été créé sur un dispositif sécurisé, puisqu'il doit être signé avec la clé privée de dispositif appropriée. Selon un mode de réalisation de la présente invention, la technique de signature d'une clé d'utilisateur avec la clé privée de dispositif est réalisée de telle manière que seules les clés générées par le dispositif ont l'autorisation d'être signées par la clé privée de dispositif, garantissant ainsi que le couple de clés d'utilisateur a été créé au sein du dispositif. Parce qu'un numéro d'identification personnel, un code d'accès ou similaire sont nécessaires pour accéder au dispositif, un utilisateur autorisé doit être en possession du dispositif lorsqu'une telle clé est générée.

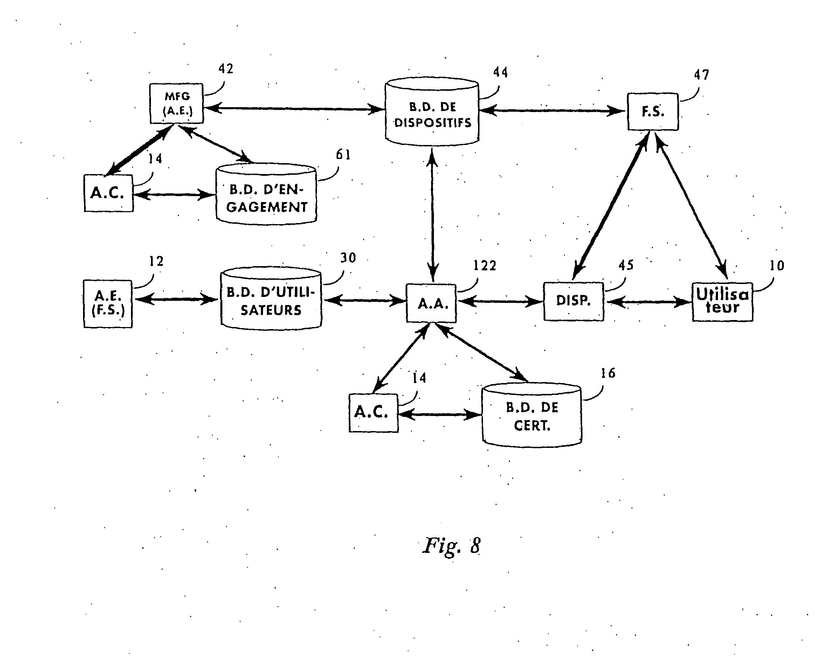

La figure 8 est un organigramme illustrant comment le système de lots de dispositifs présenté sur la figure 4A et le système d'activation de dispositifs présenté sur la figure 7A sont en corrélation, selon un mode de réalisation de la présente invention. Il convient de remarquer que le fabricant 42 peut agir en qualité d'autorité d'enregistrement, comme il a été décrit ci-dessus. Cependant, il sera reconnu par les spécialistes de la technique qu'un autre dispositif séparé pourrait être utilisé comme autorité d'enregistrement. Qui plus est, l'autorité d'enregistrement (A.E.) 12, décrite ci-dessus, peut comprendre un fournisseur de services, comme le F.S. 47. L'A.C. 14 est présentée comme étant en communication à la fois avec le MFG 42 et l'A.A. 122. Toutefois, selon un mode de réalisation de la présente invention, l'A.C. 14 en communication avec le MFG 42 peut avoir trait à des certificats de dispositifs, tandis que l'A.C. 14 en communication avec l'A.A. 122 peut avoir trait à des certificats d'utilisateurs. Ainsi, la fonctionnalité de l'A.C. 14 peut être divisée en fonctions de dispositif et d'utilisateur, qui peuvent être réalisées au sein du même dispositif physique, ou de dispositifs physiques séparés.

Le système de validation utilisé pour valider des transactions en rapport avec un mode de réalisation de la présente invention est illustré sur la figure 9A. Les organigrammes présentés sur les figures 9B et 9C illustrent en détail les étapes associées à la validation effectuée par le système de validation présenté sur la figure 9A et seront traités en relation avec la figure 9A.

Sur la figure 9A, une autorité de validation (A.V.) 154 communique avec un dispositif d'utilisateur 120 par le biais d'un fournisseur d'applications 158, ou en option directement avec le dispositif. Il sera compris par les spécialistes de la technique que cela peut être accompli via une passerelle, accessible par le dispositif d'utilisateur 120 via d'autres entités, telles que le fournisseur de services ou similaire. L'A.V. 154 communique également avec le centre de traitement des paiements 162 via le fournisseur d'applications 158. Les reçus de transaction sont enregistrés par l'A.V. 154 dans la base de données de reçus de transaction 160, alors que les certificats d'utilisateurs sont enregistrés dans la base de données de certificats d'utilisateurs 125, à laquelle l'A.V. 154 peut accéder. La base de données de reçus de transaction 160 peut, en option, être accessible au fournisseur d'applications 158 et une base de données de dispositifs 44 peut, en option, être accessible à l'A.V. 154.

Le système de validation illustré sur la figure 9A est utilisé lorsqu'un dispositif d'utilisateur 120, au cours de transactions commerciales (par ex. via un réseau), transmet un message de transaction signé tel qu'il est montré à l'étape 164 de la figure 9B, qui est ensuite envoyé à l'A.V. 154 à l'étape 166. Le message de transaction peut, de manière optionnelle, être transmis à l'A.V. 154 directement, ou via un dispositif de passerelle. Dans un tel cas, comme il est montré à l'étape optionnelle 165, une confirmation de reçu du message de transaction signé transmis à l'étape 164 peut être fournie au dispositif de l'utilisateur à l'étape 165 par la passerelle. L'A.V. 154 traite alors la demande de validation à l'étape 168, dont les détails sont traités en relation avec la figure 9C. Une fois que le processus de validation est complet à l'étape 168, les résultats de la validation peuvent être transmis en option à une passerelle ou un autre dispositif à l'étape optionnelle 170.

Il est déterminé à l'étape 172 si oui ou non le message de transaction est valide. S'il est déterminé à l'étape 172 qu'une transaction n'a pas été validée à l'étape 172, un rejet de message de service peut être, de manière optionnelle, transmis à un utilisateur à l'étape optionnelle 174, après quoi le processus se termine à l'étape 176. Si, néanmoins, il est déterminé à l'étape 172 que la transaction a été validée à l'étape 172, la transaction validée est alors transmise par l'A.V. 154 au fournisseur d'applications 158 à l'étape 178. Le fournisseur d'applications 158 peut, en option, traiter le paiement à l'étape optionnelle 180, en recourant au centre de traitement des paiements 162. Une fois que le fournisseur d'applications 158 a reçu la transaction validée, la transaction est réalisée à l'étape 182 par le fournisseur d'applications 158. Une fois cette transaction réalisée, les résultats sont renvoyées à l'utilisateur à l'étape 184.

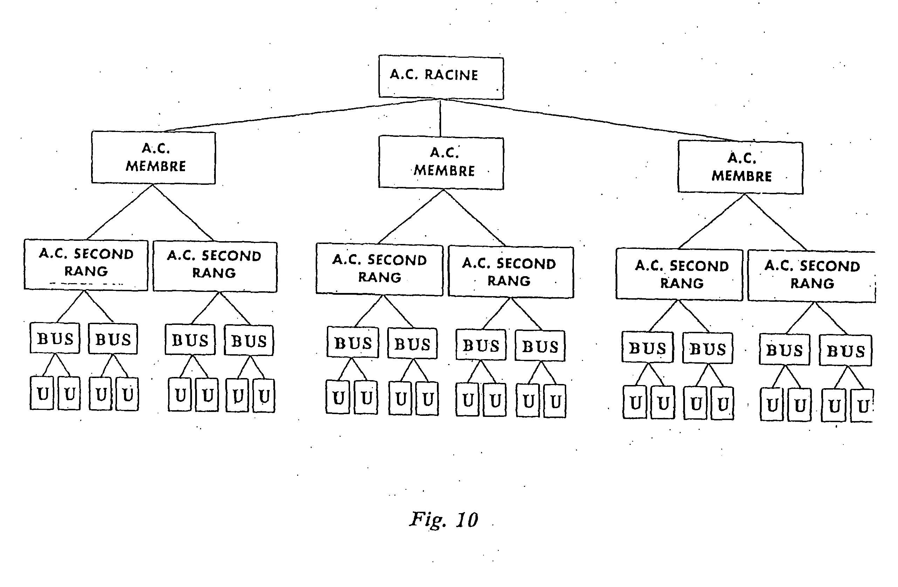

La technique de validation de l'étape 168 illustrée sur la figure 9B est présentée plus en détail sur l'organigramme de la figure 9C. Sur la figure 9C, la demande de validation est traitée par l'A.V. 154 en validant d'abord le certificat d'utilisateur et la chaîne de certificats associés à cet utilisateur à l'étape 186. La chaîne de certificats qui peut être validée à l'étape 186 est traitée plus en détail en référence à la figure 10. De manière optionnelle, le dispositif peut être validé à l'étape 187. Puis, la demande est traduite et la signature vérifiée à l'étape 188. Un chronotimbre sécurisé est alors généré à l'étape 190 et la transaction est signée et enregistrée sous forme de reçu électronique et de base de données de reçus de transactions 160 à l'étape 192.

En validant le certificat d'utilisateur et la chaîne de certificats associés au certificat d'utilisateur à l'étape 186, l'A.V. 154 peut interroger la base de données de certificats d'utilisateurs 125, qui peut aussi contenir des listes de révocation à consulter. En option, l'A.V. 154 peut interroger une base de données de dispositifs 44 afin de déterminer qu'une autorisation de dispositif n'a pas été révoquée. Il sera reconnu par les spécialistes de la technique que des agences d'authentifications externes peuvent être employées pour authentifier à la fois les certificats d'utilisateur et une chaîne de certificats associés à un certificat d'utilisateur. De telles ressources peuvent inclure, par exemple, des organismes qui publient des listes de révocation standard, comprenant diverses agences pour le contrôle des certificats utilisés dans le commerce sur l'Internet.

Sur la figure 10, une chaîne hiérarchisée de certificats est illustrée. C'est cette chaîne de certificats associée à une chaîne d'utilisateurs qui est validée par l'A.V. 154 à l'étape 186 de la figure 9C. Sur la figure 10, une A.C. Racine est illustrée comme étant associée à un certain nombre d'A.C. Membres. L'A.C. Racine est responsable de la délivrance de certificats à des A.C. Membres. Les A.C. Membres délivrent des certificats à des A.C. de Second Rang qui délivrent des certificats à des entreprises. Les entreprises délivrent alors des certificats aux utilisateurs, qui peuvent être des clients, des employés et ainsi de suite. De ce fait, quand un certificat d'utilisateur est validé et que l'utilisateur est authentifié, non seulement le certificat d'utilisateur doit être validé, mais encore la totalité de la chaîne remontant de l'utilisateur jusqu'à l'A.C. Racine doit également être validée.

Par exemple, si l'A.C. Racine a son certificat révoqué, alors tous les certificats délivrés à chacune des entités illustrées sur la figure has 10 seraient invalides. De même, si le certificat d'une A.C. Membre est révoqué, alors les certificats des A.C. de Second Rang, des entreprises et des utilisateurs correspondants, qui reçoivent des certificats soit directement, soit indirectement de la part de l'A.C. Membre dont les certificats ont été révoqués, seraient également invalidés. Par conséquent, si un certificat d'utilisateur doit être validé, la société émettrice qui a émis le certificat à l'utilisateur doit aussi faire valider son certificat, conjointement aux certificats de l'A.C. de Second Rang, de l'A.C. Membre et de l'A.C. Racine directement au-dessus de la société dans la hiérarchie illustrée sur la figure 9, afin de garantir que le certificat de l'utilisateur est valide et que l'identité du dispositif de l'utilisateur peut être correctement authentifiée. Cette validation s'effectue généralement de haut en bas, en vérifiant d'abord l'A.C. Racine, suivie par l'identification de chaque entité en-dessous de l'A.C. Racine jusqu'à l'A.C. utilisateur.

Un exemple d'une hiérarchie du type illustré sur la figure 10 est le système bancaire mondial. Dans le système bancaire mondial, qui serait utilisé dans les transactions de change monétaire par des dispositifs possédant des certificats émis selon un mode de réalisation de la présente invention, l'A.C. Racine est l'A.C. Racine Identrus. Les A.C. Membres comprendraient environ sept banques principales, notamment les banques principales telles que Chase, Citibank, Deutsche Bank et d'autres. Près de 30 A.C. de Second Rang viendraient directement se ranger sous chaque banque principale. Tous les A.C. de Second Rang auraient environ 80 000 sociétés directement en-dessous d'elles au niveau commercial, chacune desquelles peut avoir de multiples utilisateurs directement en-dessous d'elles. L'avantage d'utiliser une hiérarchie, telle que le type illustré sur la figure 10, est qu'un utilisateur utilisant un dispositif a seulement besoin de vérifier un seul certificat racine, ce qui est particulièrement avantageux, vu la mémoire et les capacités de largeur de bande limitées de nombreux dispositifs.

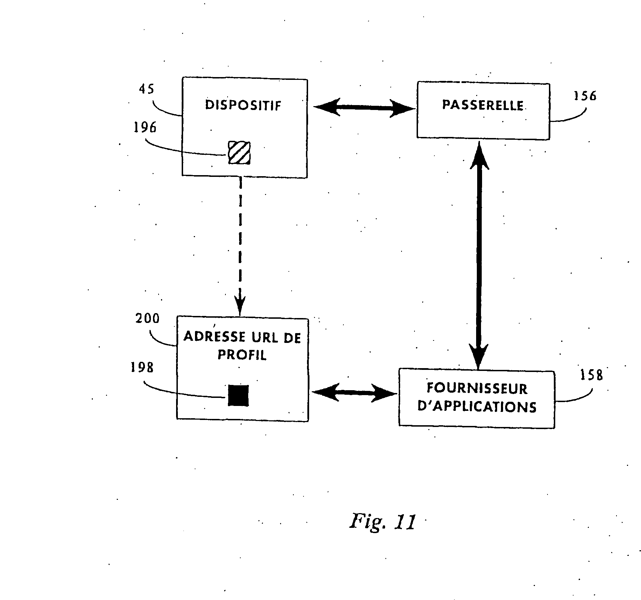

Une fois le dispositif validé, celui-ci peut être utilisé et il est possible d'accéder à des informations sur les préférences et / ou le profil de l'utilisateur auquel appartient le dispositif 45. Dans un tel cas, comme l'illustre la figure 11, le fournisseur d'applications 158 peut demander au dispositif 45, qui est montré en communication avec un fournisseur d'applications 158 via une passerelle 156, de fournir certaines informations sur l'utilisateur et/ou une personnalisation. Les spécialistes de la technique reconnaîtront qu'il pourrait être fait en sorte que le dispositif 45 communique directement avec le fournisseur d'applications 158. Traditionnellement, le fournisseur d'applications 158 demande de telles informations sous la forme d'un "cookie," qui est un petit fichier personnalisé généralement enregistré dans la mémoire du dispositif 45. Toutefois, en raison de contraintes de taille et de la mémoire de certains dispositifs 45, enregistrer les données cruciales contenues dans un ou plusieurs fichiers cookie dans la mémoire résidente du dispositif 45 surchargerait le dispositif 45. De plus, le transfert de ces données par le biais de connexions de réseau plus lentes peut surcharger le réseau en augmentant les exigences de largeur- de bande pour chaque dispositif utilisant de telles informations de cookie.

Par conséquent, selon un mode de réalisation de la présente invention, un pointeur 196 peut être prévu sur le dispositif de l'utilisateur 45 qui désigne un cookie 198 situé à un emplacement éloigné, identifié par une adresse URL de profil 200. Ainsi, de cette manière, l'utilisateur utilisant le dispositif 45 peut bénéficier de tous les avantages associés aux informations de personnalisation et de profil, afin d'obtenir une expérience personnalisée du fournisseur d'applications 158, comme si le cookie était stocké sur le dispositif 45, tout en minimisant la quantité de mémoire requise sur le dispositif 45 afin de stocker de telles informations ou la largeur de bande requise pour transférer de telles informations. Il est possible d'accéder aux informations de profil du cookie pendant la routine de démarrage du dispositif 45, ou lors de l'utilisation du dispositif 45 dans une application requérant des informations enregistrées dans le cookie.

Il peut être déduit de ce qui précède que la présente invention propose un procédé grâce auquel un vaste groupe de dispositifs peut être relié à un seul certificat numérique ou une seule notarisation au sein de l'infrastructure d'autorisation, comme le système d'I.C.P. ou similaire. Ainsi, la présente invention propose une manière dans laquelle les coûts associés à l'émission de certificats pour un grand nombre de dispositifs peuvent être minimisés, tout en rendant les mesures de sécurité associées aux certificats numériques aisément accessibles et sensiblement transparentes pour les utilisateurs, formant ainsi une partie de systèmes déjà en place, auxquels les utilisateurs sont habitués. De surcroît, la présente invention permet à des couples de clés d'utilisateurs d'être créées de manière sécurisée et / ou ajoutées à un dispositif et associées à un certificat de dispositif d'une manière aisément authentifiée, non répudiée et en conformité avec diverses lois sur la signature numérique de par le monde. Finalement, la présente invention propose une technique grâce à laquelle des informations sur les préférences et le profil de l'utilisateur peuvent être enregistrées, et consultées au moyen d'un dispositif d'utilisateur, sans avoir besoin de grandes quantités de mémoire sur le dispositif lui-même.

Il sera apprécié par les spécialistes ordinaires de la technique que la présente invention peut être réalisée sous d'autres formes spécifiques sans s'éloigner de l'esprit ou des caractéristiques centrales de celle-ci. Par exemple, l'invention a été décrite dans le contexte de l'utilisation de cartes à puce dans un environnement d'I.C.P., incluant des cartes SIM utilisées dans des systèmes de téléphonie mobile GSM. Cependant, le procédé de la présente invention peut être utilisé dans tout système d'infrastructure de sécurité qui fournit des certificats numériques pour authentifier des utilisateurs et / ou des dispositifs et valider des transactions. En outre, la présente invention ne doit pas être limitée aux cartes à puce et / ou cartes SIM, étant donné qu'elle peut être employée dans une variété de dispositifs capables de stocker des informations sur des certificats numériques et des clés. Qui plus est, il est envisagé que les informations sur les préférences ou le profilage de l'utilisateur, associées au certificat de l'utilisateur, puissent être enregistrées par ailleurs au sein d'un dispositif, comme à un emplacement central référencé par un pointeur stocké au sein du dispositif.

Les modes de réalisations décrits dans la présente sont, en conséquence, considérés à tous les égards comme étant illustratifs et non restrictifs.

## Revendications

1. Procédé pour déployer un réseau sécurisé permettant la réalisation de transactions sécurisées via un réseau de communication ouvert par l'intermédiaire de dispositifs (45), comprenant une affectation, par une autorité de certification (14) à destination d'une autorité d'enregistrement (12), d'un unique certificat d'identité, tel qu'un certificat numérique, pour un lot ou groupe de dispositifs (45) devant être utilisés dans des transactions sécurisées via le réseau de communication ouvert, **caractérisé en ce qu'**une autorité d'activation (122) communique avec les dispositifs (45), les bases de données d'utilisateurs et de dispositifs afin de gérer l'activation des dispositifs.

2. Procédé selon la revendication 1 dans lequel un fabricant (42) agit en qualité d'autorité d'enregistrement (12) et demande le certificat d'identité auprès de l'autorité de certification (14).

3. Procédé selon la revendication 1 ou 2 **caractérisé en ce qu'**il comprend en outre l'étape d'enregistrement d'un manifeste permanent dans une base de données d'engagement qui indique l'identificateur de chaque dispositif apparenté au certificat d'identité affecté au lot ou groupe de dispositifs auquel le dispositif appartient.

4. Procédé selon la revendication 3 **caractérisé en ce qu'**il comprend l'enregistrement d'une liste courante des dispositifs approuvés pour réaliser des transactions sécurisées et une liste de révocation.

5. Procédé selon l'une des revendications 3 ou 4 dans lequel le manifeste permanent est tenu par un fabricant de dispositifs.

6. Procédé selon l'une des revendications 3 ou 4 dans lequel le manifeste permanent est tenu par une autorité de certification.

7. Procédé selon l'une quelconque des revendications précédentes **caractérisé en ce qu'**il comprend l'enregistrement d'un couple de clés de dispositifs au sein d'un dispositif, comprenant une clé privée et une clé publique de dispositif, puis les étapes suivantes :
- génération d'un couple de clés d'utilisateur, comprenant une clé publique et une clé privée d'utilisateur, au sein du dispositif ;
- signature de la clé publique d'utilisateur à l'aide de la clé privée de dispositif associée au dispositif ;
- transmission de la clé publique d'utilisateur à l'autorité signée d'activation (122) ou une autre autorité de réseau impliquée dans l'identification de dispositifs ;
- déchiffrement de la clé publique d'utilisateur signée à l'aide de la clé publique de dispositif.

## Claims

1. Method of rolling out a secure network enabling devices (45) to conduct secure transactions over an open communication network, comprising allocation by a certification authority (14), sent to a registration authority (12), of a unique identification certificate, such as a digital certificate, for a batch or group of devices (45) to be used in secure transactions over the open communication network, **characterised in that** an activation authority (122) communicates with the devices (45) and the user and device databases in order to manage device activation.

2. Method according to claim 1, wherein a manufacturer (42) acts as registration authority (12) and requests the identification certificate from the certification authority (14).

3. Method according to claim 1 or 2, **characterised in that** it also comprises a step of registering a permanent manifest in an engagement database that shows the identifier of each device related to the identification certificate assigned to the batch or group of devices to which the device belongs.

4. Method according to claim 3, **characterised in that** it comprises the registration of a current list of devices approved to conduct secure transactions as well as a revocation list.

5. Method according to one of the claims 3 or 4, wherein the permanent manifest is maintained by a device manufacturer.

6. Method according to one of the claims 3 or 4, wherein the permanent manifest is maintained by a certification authority.

7. Method according to any one of the preceding claims, **characterised in that** it comprises the registration of a pair of device keys in a device, comprising a private key and a public key for the device, followed by the following steps:
- generating a pair of user keys, comprising a public key and a private key for the user, inside the device;
- signing the public user key using the private key of the device associated with the device;
- sending the signed public user key to the activation authority (122) or any other network authority involved in device identification;
- decoding the signed public key of the user using the public key of the device.

## Patentansprüche

1. Verfahren zum Betreiben eines gesicherten Netzes, das die Durchführung gesicherter Transaktionen über ein durch Vorrichtungen (45) geöffnetes Kommunikationsnetz ermöglicht, mit einer von einer Zertifizierungsstelle (14) an eine Aufzeichnungsstelle (12) gerichteten Zuweisung eines einzigen Identitätszertifikats, wie ein digitales Zertifikat, für ein Los oder eine Gruppe von Vorrichtungen (45), die bei gesicherten Transaktionen über das offene Kommunikationsnetz zu verwenden sind, **dadurch gekennzeichnet, dass** eine Aktivierungsstelle (122) mit den Vorrichtungen (45), den Benutzerdatenbänken und mit Vorrichtungen kommuniziert, um die Aktivierung der Vorrichtungen zu verwalten.

2. Verfahren gemäß Anspruch 1, bei dem ein Hersteller (42) als Aufzeichnungsstelle (12) fungiert und das Identitätszertifikat bei der Zertifizierungsstelle (14) abfragt.

3. Verfahren gemäß Anspruch 1 oder 2, **dadurch gekennzeichnet, dass** es ferner den Aufzeichnungsschritt eines permanenten Verzeichnisses in einer Engagementdatenbank umfasst, die die Identifikationsnummer jeder mit dem Identitätszertifikat verbundenen Vorrichtung angibt, die dem Los oder der Gruppe von Vorrichtungen zugewiesen ist, zu dem/der die Vorrichtung gehört.

4. Verfahren gemäß Anspruch 3, **dadurch gekennzeichnet, dass** es die Aufzeichnung einer laufenden Liste der für die Durchführung der gesicherten Transaktionen zugelassenen Vorrichtungen sowie eine Widerrufungsliste umfasst.

5. Verfahren gemäß einem der Ansprüche 3 oder 4, bei dem das permanente Verzeichnis von einem Vorrichtungshersteller 10 geführt wird.

6. Verfahren gemäß einem der Ansprüche 3 oder 4, bei dem das permanente Verzeichnis von einer Zertifizierungsstelle geführt wird.

7. Verfahren gemäß einem der vorherigen Ansprüche, **dadurch gekennzeichnet, dass** es die Aufzeichnung eines Paares von Vorrichtungen innerhalb einer Vorrichtung umfasst, bestehend aus einem privaten Schlüssel und einem öffentlichen Vorrichtungsschlüssel, sowie die folgenden Schritte:
- Erzeugung eines Benutzer-Schlüsselpaars, bestehend aus einem öffentlichen Schlüssel und einem privaten Benutzerschlüssel, innerhalb der Vorrichtung;
- Signatur des öffentlichen Benutzerschlüssels anhand des privaten, der Vorrichtung zugeordneten Vorrichtungsschlüssels;
- Übertragung des öffentlichen Benutzerschlüssels an die signierte Aktivierungsstelle (122) oder an eine andere, an der Identifikation von Vorrichtungen beteilige Netzstelle;
- Entschlüsseln des signierten öffentlichen Benutzerschlüssels anhand des öffentlichen Vorrichtungsschlüssels.
